# EUROPÄISCHE PATENTANMELDUNG

(11) **EP 1 629 970 A2**
(43) Veröffentlichungstag der Anmeldung: **01.03.2006**
(21) Anmeldenummer: 05107662.8
(22) Anmeldetag: 22.08.2005
(51) Int. Cl.: B32B 18/00, C04B 35/185, C04B 35/80

(54) **Formadaptiver keramischer Faserverbundstoff**

(30) Priorität: 28.08.2004 DE 102004041718
(71) Anmelder: DLR Deutsches Zentrum für Luft- und Raumfahrt e.V., 53175 Bonn (DE)
(72) Erfinder: Schmücker, Martin, 53604, Bad Honnef (DE); Mechnich, Peter, 67098, Bad Dürkheim (DE)
(74) Vertreter: Jönsson, Hans-Peter

(57) **Zusammenfassung**

Gegenstand der Erfindung ist ein thermisch reversibel verformbares Schichtsystem aus wenigstens zwei keramischen Schichten und dessen Verwendung zur selbsttätigen und gezielten Lenkung von heißem und hochkorrosivem Fluid.

## Beschreibung

Gegenstand der Erfindung ist ein thermisch reversibel verformbares Schichtsystem aus wenigstens zwei keramischen Schichten und dessen Verwendung zur selbsttätigen und gezielten Lenkung von heißem und hochkorrosivem Fluid.

Typische Bauelemente mit der Fähigkeit zu einer reversiblen, temperaturabhängigen Formveränderung sind die so genannten Bimetalle, welche zum Beispiel in Form von Bimetallstreifen als Thermometer oder auch als temperaturabhängige Stromschalter eingesetzt werden. Dabei wird die unterschiedliche thermische Dehnung zweier chemisch unterschiedlicher, fest miteinander verbundenen Metallschichten zur Verformung des Bauelements genutzt. Solche Bimetall-Elemente können bis zu Temperaturen von 500°C verwendet werden.

DE 102 25 453 A beschreibt eine weitere Variante eines solchen Bauelements. Es besteht aus einem Metall mit einer darauf befindlichen Keramikschicht. Zirkoniumoxid wird hierbei durch Elektronenstrahl-Verdampfung auf das Metall aufgebracht. Dabei zeigt das Metall eine größere Wärmedehnung als die Keramikschicht. Die Keramikschicht hat die besondere Eigenschaft, dass sie aufgrund ihres kolumnaren Gefüges eine relativ große Verformung reversibel zulässt. Die maximale thermische Belastbarkeit ist aufgrund der verwendeten Materialkombination (warmfester Stahl/Keramik) deutlich höher als bei reinen Bimetallelementen, so dass diese Bimaterialelemente aus der DE 102 25 453 A beispielsweise zur Regelung von Gasströmen im Bereich von 500 und 1000 °C eingesetzt werden können.

EP 0 378 797 A1 betrifft eine Strömungsleitklappe (6; 46; 51-56; 61-66; 107, 108), insbesondere für Abgassysteme von Kraftfahrzeugen, enthaltend mindestens zwei Schichten (7,8; 47, 48a, 48b, 48c; 51a, 51b, 54a, 54b, 55a, 55b; 61, 64, 65, 66; 107, 108) von Metallen mit unterschiedlichen Wärmeausdehnungskoeffizienten, die dadurch gekennzeichnet ist, dass die Klappe (6; 46; 51-56; 61-66) durch Aufbau und/oder Form und/oder Zusatzteile (55a, 55b, 56; 65) eine erhöhte Steifigkeit und verringerte Schwingungsneidung aufweist.

Aus US 3,002,386 ist ein temperaturabhängiges verformbares Thermostat-Schaltelement bekannt, das aus Schichten unterschiedlicher Wärmeausdehnungskoeffizienten besteht, wobei mindestens eine Schicht ein glaskeramisches Material umfasst. Dabei können die jeweils äußeren Schichten des mehrlagigen Schaltelements aus glaskeramischem Material bestehen.

Die für sich temperaturabhängig verformende Bauelemente bislang beschriebenen Materialkombinationen erlauben maximale Anwendungstemperaturen von 500°C für Bimetalle und bis zu 1000°C für Metall/Keramik-Bimaterialien. Die Keramikschichten müssen durch aufwendige, kostenintensive Verfahren auf die Metalle aufgebracht werden. Gleichzeitig zeigen besonders Metalle eine hohe Anfälligkeit gegen Korrosion in aggressiven Medien wie zum Beispiel Stickoxiden (NOₓ) oder HCl. Daher sind diese nicht zum Einsatz in thermisch und korrosiv hoch belastenden Heißgasströmen geeignet, wie sie zum Beispiel im Brennkammerbereich von Gasturbinen auftreten.

Es ist daher die Aufgabe der vorliegenden Erfindung sehr heiße und gegebenenfalls auch hochkorrosive Fluide gezielt und selbsttätig lenken zu können und ein Bauteil bereitzustellen, das diese Aufgabe lösen kann.

Die vorgenannte Aufgabe wird in einer ersten Ausführungsform gelöst durch ein thermisch reversibel verformbares Schichtsystem aus wenigstens zwei Schichten mit unterschiedlichem Wärmeausdehnungskoeffizient dadurch gekennzeichnet, dass die äußeren Schichten jeweils aus keramischen Materialien bestehen und das Schichtsystem bei Temperaturen von wenigstens 1000 °C funktionsstabil ist. Die Schichten sind fest miteinander verbunden.

Für den Fall der Anwesenheit von mehr als zwei Schichten können die sandwichartig im Inneren befindlichen Schichten ebenfalls aus Keramik, Metall oder anderen hochtemperaturbeständigen Materialien bestehen.

Die Temperaturbeständigkeit von diesen insbesondere reinen Keramiksystemen ist deutlich höher als die der Systeme aus Metallen oder der Hybridsysteme aus Metallen mit Keramik bei denen eine oder mehrere äußere Schichten aus Metall besteht. Weiterhin ist die Beständigkeit von den erfindungsgemäßen Schichtsystemen gegenüber Korrosion, wie zum Beispiel gegen heiße Säuredämpfe, wesentlich höher als bei vergleichbaren Systemen des Standes der Technik. Das erfindungsgemäße Schichtsystem ist sehr tolerant gegenüber hohen Aufheiz- bzw. Abkühlraten, Temperaturgradienten und mechanischen Überlasten.

Das erfindungsgemäße Schichtsystem ist bei Temperaturen von wenigstens 1000 °C, vorzugsweise wenigstens 1400 °C, funktionsstabil. Hierdurch kann dies Schichtsystem zur Lenkung von sehr heißen Fluiden beispielsweise im Brennkammerbereich von Gasturbinen Einsatz finden. Zum Beispiel kann eine adaptive Kühlluftzuführung realisiert werden.

Das erfindungsgemäße Schichtsystem weist vorteilhafterweise eine Korrosionsbeständigkeit gegenüber obengenannten Medien auf. Dies ist vor allem deshalb von Vorteil, da das Schichtsystem dadurch in hochkorrosiven Umgebungen wie Brennkammern von Gasturbinen eingesetzt werden kann.

Vorteilhafterweise weist das erfindungsgemäße Schichtsystem eine hohe Thermowechselbeständigkeit in einem Temperaturbereich von mindestens - 40 °C bis 1400 °C auf. Dadurch ist das Schichtsystem auch in diskontinuierlichen Verbrennungsprozessen einsetzbar, bei denen die Umgebungstemperatur signifikant von der Prozesstemperatur abweicht, wie dies beispielsweise bei Flugzeugturbinen der Fall ist. Das Schichtsystem ist ebenfalls sehr beständig gegenüber Temperaturgradienten im Bereich der vorgenannten Temperaturen.

Das erfindungsgemäße Schichtsystem ist vorzugsweise ein Bauteil zum Lenken von hochkorrosiven und/oder sehr heißen Fluiden.

Vorzugsweise beträgt die Differenz der Wärmeausdehnungskoeffizienten der Schichten wenigstens 1 x 10⁻⁶ K⁻¹, wodurch eine hinreichende thermische Verformung gewährleistet wird.

In einer besonders vorteilhaften Ausführungsform des erfindungsgemäßen Schichtsystems besteht eine der Schichten aus einem keramischen Faserverbundwerkstoff (CMC). Die Faserverstärkung sorgt dabei für eine hohe Schadenstoleranz bei extremen thermomechanischen Verformungen und mechanischem Überlasten. Diese Schicht ist die tragende Schicht des Schichtsystems und wird zweckmäßigerweise im ersten Prozessschritt hergestellt.

Vorzugsweise enthält der Faserverbundwerkstoff 70 bis 100 Gew.% Al₂O₃ und 0 bis 30 Gew. % SiO₂. Die weitere, damit verbundene Schicht besteht vorzugsweise aus einem keramischen Material, das ausgewählt ist aus der Gruppe Al₂O₃, ZrO₂, CeO₂, HfO₂, insbesondere Al₂O₃.

Durch Variation der chemischen Zusammensetzung der Schichten, kann die Differenz der thermischen Ausdehnung und somit die Auslenkung der Bauelemente in weitem Bereich eingestellt werden.

Das erfindungsgemäße Schichtsystem besteht also bevorzugt aus wenigstens einem keramischen Faserverbundwerkstoff, welcher mit einer weiteren Keramikschicht versehen ist. Die Keramikschicht weist eine andere thermische Ausdehnung als der keramische Faserverbundwerkstoff auf. Da der Faserverbundwerkstoff in einer nahezu beliebigen Form hergestellt werden kann, kann die Keramikschicht in einem zweiten Schritt durch einfache Verfahren (Pinseln, Tauchen, Sprühbeschichtung, Vorhanggießen, etc.) und anschließende Wärmebehandlung auf dem keramischen Faserverbundwerkstoff aufgebracht werden. Von besonderem Vorteil ist dabei, dass der keramische Faserverbund vor der Beschichtung ohne Schädigung mit Bohrungen, Nuten o.ä. zur Montage versehen werden kann.

Als Ausgangsmaterial kann für den Faserverbundwerkstoff vorzugsweise ein oxidkeramisches Fasergewebe dienen. Dieses Fasergewebe wird dann mit einer dünnflüssigen Suspension eines Keramikpulvers infiltriert, geformt und getrocknet. Durch eine Wärmebehandlung bei 1300 bis 1350° wird der Faserverbundwerkstoff zur erfindungsgemäßen ersten Schicht konsolidiert.

In einer zweiten Ausführungsform wird die obenstehende Aufgabe gelöst durch die Verwendung des erfindungsgemäßen Schichtsystems zur gezielten und selbsttätigen Lenkung von hochkorrosivem Fluid.

Vorzugsweise weist das Fluid eine Temperatur von wenigstens 1000 °C, insbesondere eine Temperatur von wenigstens 1400 °C auf. Dadurch stellt das verwendete Schichtsystem Überlegenheit gegenüber herkömmlichen Bimetall-Systemen unter Beweis.

### Ausführungsbeispiel:

Die Matrix des Faserverbundwerkstoffs bestand zu 75% aus Al₂O₃ und zu 25% aus SiO₂ und daher weitgehend aus Mullit (Al₆Si₂O₁₃) mit einem Koeffizienten der thermischen Dehnung von ca. 5*10⁻⁶ K⁻¹. Die Fasern bestanden chemisch zu 85% aus Al₂O₃ und zu 15% aus SiO₂. Als Phasen lagen daher ca. 60 % Mullit und 40 % Korund (α-Al₂O₃) vor. Daraus resultierte ein thermischer Dehnungskoeffizient von ca. (0,6*5 + 0,4*8)*10⁻⁶ = 6*10⁻⁶ K⁻¹. Je nach Verhältnis Faser/Matrix ergibt sich so für den Faserverbundwerkstoff ein Gesamtdehnungskoeffizient im Bereich von 5*10⁻⁶ bis 6*10⁻⁶ K⁻¹. Auf den Faserverbundwerkstoff wurde einseitig eine Suspension aufgetragen, welche nach einer weiteren Wärmebehandlung bei 1300-1350°C zu einer Aluminiumoxidschicht (thermischer Dehnungskoeffizient 8*10⁻⁶ K⁻¹) konsolidiert wurde. Die ausgeprägt strukturierte Oberfläche des Faserverbundwerkstoffs sorgte dabei für eine sehr gute Verzahnung und damit Haftung der Keramikschicht.

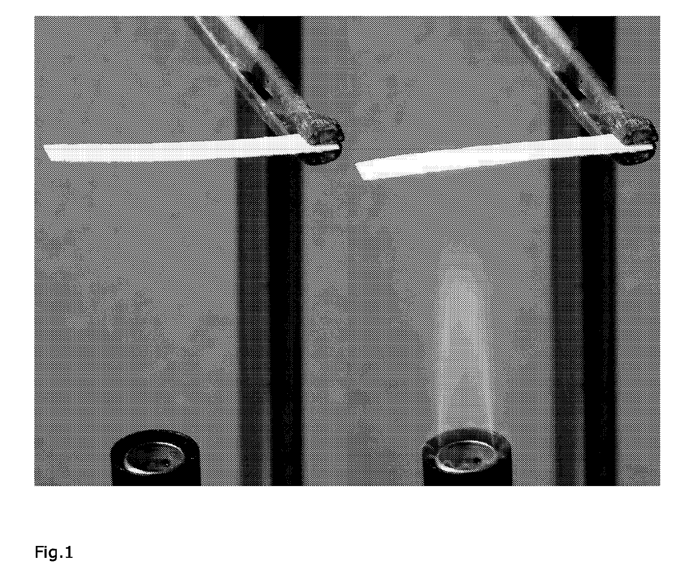

In Fig. 1 ist die Verformung des streifenförmigen Ausführungsbeispiels in einer etwa 1400°C heißen Flamme zu sehen. Die Al₂O₃-Schicht (oben liegend) hatte eine deutlich höhere thermische Dehnung (Koeffizient 8*10⁻⁶ K⁻¹) als der Faserverbundwerkstoff (Koeffizient 5 bis 6*10⁻⁶ K⁻¹), so dass die Verformung in Richtung des Verbundwerkstoffs (unten liegend), also gegen die Gasströmung erfolgte.

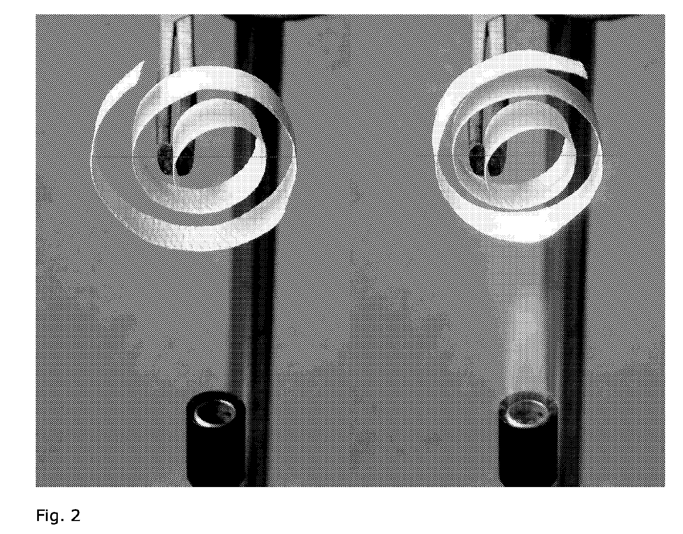

In Fig. 2 ist die Möglichkeit der sehr variablen Formgebung anschaulich demonstriert. Das Modell war einem klassischen Bimetall-Thermometer nachempfunden. Die Aluminiumoxid-Schicht lag hier außen. Durch Erwärmung der Spirale im Heißgasstrom ergab sich eine signifikante Formveränderung.

## Patentansprüche

1. Thermisch reversibel verformbares Schichtsystem aus wenigstens zwei Schichten mit unterschiedlichem Wärmeausdehnungskoeffizient, **dadurch gekennzeichnet, dass** die äußeren Schichten jeweils aus keramischen Materialien bestehen und das Schichtsystem bei Temperaturen von wenigstens 1000 °C funktionsstabil ist.

2. Schichtsystem nach Anspruch 1 **dadurch gekennzeichnet, dass** das Schichtsystem bei Temperaturen von wenigstens 1400 °C, funktionsstabil ist.

3. Schichtsystem nach einem der Ansprüche 1 oder 2 **dadurch gekennzeichnet, dass** es zwei Schichten aufweist.

4. Schichtsystem nach einem der Ansprüche 1 bis 3 **dadurch gekennzeichnet, dass** die Differenz der Wärmeausdehnungskoeffizienten der Schichten wenigstens 1 x 10⁻⁶ K⁻¹ beträgt.

5. Schichtsystem nach einem der Ansprüche 1 bis 4 **dadurch gekennzeichnet, dass** wenigstens eine der Schichten einen keramischen Faserverbundwerksstoff enthält.

6. Schichtsystem nach einem der Ansprüche 1 bis 5 **dadurch gekennzeichnet, dass** wenigstens eine der Schichten 70 bis 100 Gew.% Al₂O₃ und 0 bis 30 Gew. % SiO₂ enthält.

7. Schichtsystem nach einem der Ansprüche 1 bis 6 **dadurch gekennzeichnet, dass** wenigstens eine der Schichten aus einem keramischen Material besteht, das ausgewählt ist aus der Gruppe Al₂O₃, ZrO₂, CeO₂, HfO₂, insbesondere Al₂O₃ ist.

8. Verwendung des Schichtsystems nach einem der Ansprüche 1 bis 7 zur gezielten und selbsttätigen Lenkung von hochkorrosivem Fluid.

9. Verwendung nach Anspruch 8 **dadurch gekennzeichnet, dass** das Fluid eine Temperatur von wenigstens 1000 °C, insbesondere eine Temperatur von wenigstens 1400 °C aufweist.
